# EUROPÄISCHE PATENTANMELDUNG

(11) **EP 4 711 411 A1**
(43) Veröffentlichungstag der Anmeldung: **18.03.2026**
(21) Anmeldenummer: 24200922.3
(22) Anmeldetag: 17.09.2024
(51) Int. Cl.: C08K 3/26, C08L 83/04

(54) **SCHNELL HÄRTENDE ZWEIKOMPONENTIGE SILIKONZUSAMMENSETZUNG MIT VERBESSERTER TEMPERATURSTABILITÄT**

(71) Anmelder: Sika Technology AG, 6340 Baar (CH)
(72) Erfinder: GATTI, Michele, 8048 Zürich (CH); SUTER, Riccardo, 8048 Zürich (CH)
(74) Vertreter: Sika Patent Attorneys

(57) **Zusammenfassung**

Gegenstand der vorliegenden Erfindung ist eine zweikomponentige Silikonzusammensetzung, bestehend aus einer Komponente **A,** umfassend, jeweils bezogen auf Komponente **A,**
20 bis 80 Gew.-% Hydroxylgruppen-terminiertes Polydiorganosiloxan, 5 bis 50 Gew.-% unbeschichtete, hydrophile Fällungskreide, bevorzugt zwischen 0.05 und 5.0 Gew.-% Wasser, bevorzugt zwischen 0.05 und 3.0 Gew.-% Dispersionsadditiv, sowie gegebenenfalls weitere Inhaltsstoffe; und einer Komponente B umfassend
bevorzugt mindestens ein nicht kondensierbares Polydiorganosiloxan als Weichmacher, mindestens ein Organosilan als Vernetzer, mindestens einen Katalysator für die Vernetzung von Polydiorganosiloxanen, sowie gegebenenfalls weitere Inhaltsstoffe;
dadurch gekennzeichnet, dass die Silikonzusammensetzung, falls vorhanden, weniger als 5 Gew.-%, bezogen auf die gesamte Zusammensetzung, beschichtete, hydrophobe Fällungskreide enthält.

Die erfindungsgemässe Zusammensetzung zeigt aussergewöhnlich gute Hochtem peraturstabilität.

## Beschreibung

### Technisches Gebiet

Die vorliegende Erfindung betrifft das Gebiet der zweikomponentigen Silikonzusammensetzungen.

### Stand der Technik

Zweikomponentige Silikonzusammensetzungen sind schon seit längerem bekannt und werden insbesondere als Kleb- und Dichtstoffe in unterschiedlichen Anwendungen eingesetzt. Weit verbreitet sind insbesondere bei Raumtemperatur vernetzende, zweikomponentige Silikonzusammensetzungen, auch bekannt als RTV-2 Silikone (RTV-2: "room temperature vulcanizing, 2-part silicones").

Eine derartige zweikomponentige Silikonzusammensetzung ist beispielsweise beschrieben in EP 0 787 766 A1. Um die Lagerstabilität der dort beschriebenen Zusammensetzung nicht zu beeinträchtigen bzw. um eine zu frühe, ungewollte Aushärtung zu verhindern, werden die Hauptbestandteile, nämlich ein α,ω-Dihydroxypolydiorganosiloxan und ein Katalysator sowie Vernetzer für die Vernetzung von Polydiorganosiloxanen, in zwei separaten Komponenten aufbewahrt. Bei der Applikation einer derartigen Zusammensetzung werden dann die beiden Komponenten in einem vorgesehenen Gewichts- oder Volumenverhältnis miteinander vermischt, worauf es zur Vernetzung bzw. zur Aushärtung der Zusammensetzung kommt. Die Zeit, während der die Mischung noch verarbeitbar und applizierbar ist bevor die Aushärtung zu weit fortgeschritten ist, wird als Topfzeit oder Offenzeit bezeichnet.

Ein genereller Vorteil bei der Verwendung von Silikonen gegenüber organischen Reaktionsharzen, ist die geringere Temperaturempfindlichkeit der Silikone. In der Vergangenheit hat es nicht an Anstrengungen gefehlt, Silikonformulierungen zu finden, die eine noch weiter verbesserte Temperaturstabilität aufweisen. So sind heute beispielsweise Silikonformulierungen bekannt, die zur Beschichtung von Bratpfannen verwendet werden können. Diese basieren normalerweise auf Additionsvernetzung als Aushärtemechanismus oder es handelt sich um HTV-Silikone.

Weiter sind Silikonformulierungen zum Verguss elektronischer Bauteile wie LED bekannt, die eine erhöhte Temperaturstabilität haben. Auch diese basieren normalerweise auf Additionsvernetzung als Aushärtemechanismus. Kondensationsvernetzende, feuchtigkeitshärtende Silikone (RTV-Silikone) wie anfangs beschrieben sind einfacher handzuhaben als HTV-Silikone, da sie keine Erhitzung zur Aushärtung benötigen. Gegenüber additionsvernetzenden Silikonen haben RTV-Silikone den Vorteil, dass sie im nicht ausgehärteten Zustand viel stabiler gegenüber Feuchtigkeit sind, was sich positiv auf die Lagerstabilität auswirkt und dass sie keine teuren Platinkatalysatoren zur Aushärtung benötigen. Allerdings sind RTV-Silikone die am wenigsten hitzebeständigen reaktiven Silikonsysteme. In Hochtemperaturanwendungen verlieren sie oft nach kurzer Zeit ihre mechanischen Eigenschaften und sind dadurch in der Anwendung limitiert. Aber auch im Bereich der RTV-Silikone hat es Anstrengungen gegeben, Formulierungen mit verbesserter Temperaturstabilität zu entwickeln. Diese basieren oft auf sauer vernetzenden Systemen, wodurch jedoch ein Einsatz auf säureempfindlichen und oxidierbaren Oberflächen eingeschränkt wird und/oder sie benötigen zusätzliche Massnahmen wie beispielsweise Vorbehandlungen der Substrate, die wiederum Kosten verursachen und einen weiteren Prozessschritt benötigen.

US 4769412 beschreibt beispielsweise die Verwendung von Industrieruss und Eisenoxid zur Verbesserung der Temperaturstabilität von feuchtigkeitshärtenden RTV-Silikonen.

US 5932650 beschreibt als weiteres Beispiel die Verwendung von Eisencarboxylaten zur Verbesserung der Temperaturstabilität von einkomponentigen feuchtigkeitshärtenden RTV-Silikonen.

EP-A1-1361254 betrifft die Verwendung spezieller verzweigter Polysiloxane zur Verbesserung der Temperaturstabilität von feuchtigkeitshärtenden RTV-Silikonen.

In US 5352752 wird die Verwendung von Polymeren mit mindestens teilweise fluorierten Polymereinheiten und Siloxan-Polymereinheiten zur Verbesserung der Temperaturstabilität von feuchtigkeitshärtenden RTV-Silikonen beschrieben.

Die beschrieben Ansätze haben den Nachteil, dass sie entweder nicht die erwünscht hohe Temperaturstabilität erreichen oder im industriellen Massstab umgesetzt zu teuer sind.

### Darstellung der Erfindung

Aufgabe der vorliegenden Erfindung ist es daher, eine einfach und günstig herzustellende zweikomponentige RTV-Silikonzusammensetzung bereitzustellen, welche eine verbesserte Temperaturstabilität in ausgehärteten Zustand aufweist und welche die vorstehend beschriebenen Nachteile überwindet. Insbesondere sollten die elastischen, adhäsiven und mechanischen Eigenschaften, insbesondere die Zugscherfestigkeit, der Silikonformulierung im ausgehärteten Zustand im Wesentlichen beibehalten werden, auch wenn sie erhöhten Temperaturen ausgesetzt wird, beispielsweise bei 1000 h bei > 200°C oder bei Alterung bei hoher Temperatur und Feuchtigkeit, beispielsweise während 1000 h bei 85°C und 85% relativer Luftfeuchtigkeit.

Überraschenderweise wurde gefunden, dass zweikomponentige Silikonzusammensetzungen gemäss Anspruch 1 diese Aufgabe lösen.

Durch den für den Fachmann in keiner Weise naheliegenden Einsatz einer unbeschichteten, hydrophilen Fällungskreide als Hauptfüllstoff (oder, je nach Ausführungsform, einzigen Füllstoff) kann die Temperaturstabilität gegenüber herkömmlichen Silikonzusammensetzungen, die andere Füllstoffe wie die viel üblicheren hydrophobisierten Fällungskreiden enthalten, deutlich erhöht werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine zweikomponentige Silikonzusammensetzung, bestehend aus einer Komponente **A.** Komponente **A** umfassend, jeweils bezogen auf die Komponente **A,**
i) 20 bis 80 Gew.-%, bevorzugt 25 bis 70 Gew.-%, insbesondere 30 bis 60 Gew.-% Hydroxylgruppen-terminiertes Polydiorganosiloxan **P;**
ii) 5 bis 50 Gew.-%, bevorzugt 10 bis 45 Gew.-%, insbesondere 15 bis 40 Gew.-% unbeschichtete, hydrophile Fällungskreide **F;**
iii) bevorzugt zwischen 0.05 und 5.0 Gew.-% Wasser, insbesondere emulgiertes Wasser;
iv) bevorzugt zwischen 0.05 und 3.0 Gew.-% Dispersionsadditiv **D;**
v) sowie gegebenenfalls weitere Inhaltsstoffe;
   und einer Komponente **B** umfassend

i) bevorzugt mindestens ein nicht kondensierbares Polydiorganosiloxan **W als** Weichmacher;
ii) mindestens ein Organosilan **V** als Vernetzer;
iii) mindestens einen Katalysator **K** für die Vernetzung von Polydiorganosiloxanen;
iv) sowie gegebenenfalls weitere Inhaltsstoffe;
dadurch gekennzeichnet, dass
die Silikonzusammensetzung, falls vorhanden, weniger als 5 Gew.-%, bezogen auf die gesamte Zusammensetzung, beschichtete, hydrophobe Fällungskreide enthält.

Im vorliegenden Dokument bezeichnet der Begriff "Silangruppe" eine an einen organischen Rest oder an einen Polyorganosiloxan-Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Aminosilan" bzw. "Glycidoxysilan" werden Organoalkoxysilane bezeichnet, die am organischen Rest zusätzlich zur Silangruppe eine oder mehrere Amino- bzw. Glycidoxygruppen aufweisen.

Als "primäre Aminogruppe" bzw. "primärer Amin-Stickstoff" wird eine NH₂-Gruppe bzw. deren Stickstoffatom bezeichnet, die bzw. das an einen organischen Rest gebunden ist, und als "sekundäre Aminogruppe" bzw. "sekundärer Amin-Stickstoff" wird eine NH-Gruppe bzw. deren Stickstoffatom bezeichnet, die bzw. das an zwei organische Reste, welche auch gemeinsam Teil eines Rings sein können, gebunden ist, und als "tertiäre Aminogruppe" bzw. "tertiärer Amin-Stickstoff" wird eine N-Gruppe bzw. deren Stickstoffatom bezeichnet, die bzw. das an drei organische Reste, welche auch zu zweit oder zu dritt Teil eines oder mehrerer Ringe sein können, gebunden ist.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silikone" bezeichnet) stellen keine organischen Polymere im Sinne des vorliegenden Dokuments dar.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 6 Monaten bis zu 9 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter dem Begriff "Topfzeit" oder synonym "Offenzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, dass keine zweckmässige Verarbeitung der Zusammensetzung mehr möglich ist. Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23°C bezeichnet.

Alle im Dokument erwähnten Industrienormen oder Standards beziehen sich, sofern nichts anderes angegeben, auf die zum Zeitpunkt der Einreichung der Patentanmeldung gültige Fassung der Industrienorm oder des Standards.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

### Komponente A

Die erste Komponente **A der** zweikomponentigen Silikonzusammensetzung enthält, jeweils bezogen auf die Komponente **A,**
i) 20 bis 80 Gew.-%, bevorzugt 25 bis 70 Gew.-%, insbesondere 30 bis
   60 Gew.-% Hydroxylgruppen-terminiertes Polydiorganosiloxan **P;**
ii) 5 bis 50 Gew.-%, bevorzugt 10 bis 45 Gew.-%, insbesondere 15 bis
   40 Gew.-% unbeschichtete, hydrophile Fällungskreide **F;**
iii) bevorzugt zwischen 0.05 und 5.0 Gew.-% Wasser, insbesondere emulgiertes Wasser;
iv) bevorzugt zwischen 0.05 und 3.0 Gew.-% Dispersionsadditiv **D;** sowie gegebenenfalls weitere Inhaltsstoffe.

### Polydiorganosiloxan P

Die Komponente **A der** zweikomponentigen Silikonzusammensetzung umfasst das Hydroxylgruppen terminierte Polydiorganosiloxan **P,** welches insbesondere ein Polydiorganosiloxan **P'** der Formel (IV) ist.

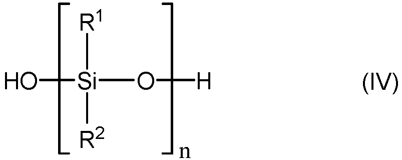

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen wobei die Reste R¹ und R² bevorzugt für Alkylreste mit 1 bis 5, insbesondere mit 1 bis 3, C-Atomen, am meisten bevorzugt für Methylgruppen, stehen; und

n so gewählt ist, dass das Gewichtsmittel des Molekulargewichts M_{w} des Polydiorganosiloxans **P'** relativ zu Polystyrol 500 bis 250'000 g/mol, bevorzugt 1'000 bis 100'000 g/mol beträgt.

Insbesondere stehen die Reste R¹ und R² für Alkylreste mit 1 bis 5, insbesondere mit 1 bis 3, C-Atomen, bevorzugt für Methylgruppen.

Der Index n ist so gewählt, dass das Gewichtsmittel des Molekulargewichts M_{w} des Polydiorganosiloxans **P** relativ zu Polystyrol 500 bis 250'000 g/mol beträgt, bevorzugt 1'000 bis 100'000 g/mol.

Insbesondere ist das Hydroxylgruppen terminierte Polydiorganosiloxan **P'** ein Polydiorganosiloxan **P1** der Formel (IV), wobei n so gewählt ist, dass das Gewichtsmittel des Molekulargewichts M_{w} des Polydiorganosiloxans **P1** relativ zu Polystyrol 30'000 bis 80'000 g/mol, insbesondere 35'000 bis 60'000 g/mol, beträgt; oder dass als Polydiorganosiloxan **P'** eine Mischung eingesetzt wird von
i') mindestens einem Hydroxylgruppen-terminierten Polydiorganosiloxan **P2** der Formel (IV), wobei n so gewählt ist, dass das Gewichtsmittel des Molekulargewichts M_{w} des Polydiorganosiloxans **P2** relativ zu Polystyrol 10'000 bis 60'000 g/mol, insbesondere 20'000 bis 55'000 g/mol, bevorzugt 30'000 bis 50'000 g/mol, beträgt; sowie
ii') mindestens einem Hydroxylgruppen-terminierten Polydiorganosiloxan **P3** der Formel (IV), wobei n so gewählt ist, dass das Gewichtsmittel des Molekulargewichts M_{w} des Polydiorganosiloxans **P3** relativ zu Polystyrol 30'000 bis 90'000 g/mol, insbesondere 40'000 bis 80'000 g/mol, bevorzugt 50'000 bis 70'000 g/mol, beträgt.

Hydroxylgruppen terminierte Polydiorganosiloxane, wie sie insbesondere in Formel (IV) dargestellt sind, sind bekannt und kommerziell erhältlich. Auch die Herstellung derartiger Polydiorganosiloxane erfolgt in bekannter Art und Weise. Beispielsweise ist sie beschrieben in US 4,962,152.

Die vorhergehend beschriebenen Hydroxylgruppen terminierten Polydiorganosiloxane **P** weisen bei 23°C vorzugsweise eine Viskosität zwischen 1 und 500'000 mPa·s, insbesondere zwischen 10 und 250'000 mPa·s, auf. Weiterhin bevorzugt weist das Polydiorganosiloxan **P1** bei 23°C eine Viskosität zwischen 5'000 und 100'000 mPa·s, insbesondere zwischen 10'000 und 75'000 mPa·s, auf.

Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so weist das Polydiorganosiloxan **P2** bei 23°C vorzugsweise eine Viskosität zwischen 10'000 und 50'000 mPa·s, insbesondere zwischen 15'000 und 25'000 mPa·s, auf und das Polydiorganosiloxan **P3** weist bei 23°C vorzugsweise eine Viskosität zwischen 20'000 und 100'000 mPa·s, insbesondere zwischen 30'000 und 75'000 mPa·s, bevorzugt zwischen 40'000 und 60'000 mPa·s auf.

Die angegebenen Viskositäten werden gemessen nach DIN 53018.

Es kann vorteilhaft sein, mehrere verschiedene Polydiorganosiloxane **P2** und/oder **P3** als Mischung zu verwenden.

Wird als Polydiorganosiloxan **P'** eine Mischung von mindestens einem Polydiorganosiloxan **P2** und mindestens einem Polydiorganosiloxan **P3** eingesetzt, liegt der Gewichtsanteil an Polydiorganosiloxan **P2** in der Regel unter dem Gewichtsanteil an Polydiorganosiloxan **P3.** Je höher der Anteil von Polydiorganosiloxan **P3** in dieser Mischung ist, desto schneller härtet die Zusammensetzung aus. Eine bevorzugte Mischung von mindestens einem Polydiorganosiloxan **P2** und mindestens einem Polydiorganosiloxan **P3** enthält 1 bis 4 Gewichtsteile, bevorzugt 2 bis 3 Gewichtsteile Polydiorganosiloxan **P3** pro Gewichtsteil Polydiorganosiloxan **P2.**

Die Komponente **A** enthält das Hydroxylgruppen-terminierte Polydiorganosiloxan **P** oder das Hydroxylgruppen-terminierte Polydiorganosiloxan **P'** bevorzugt in einer Menge von zwischen 25 Gew.-% und 70 Gew.-%, bevorzugt zwischen 30 Gew.-% und 60 Gew.-%, bezogen auf die Komponente **A.**

Handelt es sich beim Polydiorganosiloxan **P'** um eine Mischung ist von mindestens einem Hydroxylgruppen-terminierten Polydiorganosiloxan **P2** und mindestens einem Hydroxylgruppen-terminierten Polydiorganosiloxan **P3,** so enthält Komponente **A** bevorzugt zwischen 5 Gew.-% und 30 Gew.-%, bevorzugt zwischen 10 Gew.-% und 20 Gew.-%, bezogen auf die Komponente **A,** an Hydroxylgruppen-terminierten Polydiorganosiloxan **P2,** sowie zwischen 20 Gew.-% und 60 Gew.-%, bevorzugt zwischen 30 Gew.-% und 50 Gew.-%, bezogen auf die Komponente **A,** an Hydroxylgruppen-terminierten Polydiorganosiloxan **P3.**

Die beschriebenen Polydiorganosiloxane **P** können in jeder Ausführungsform auch Anteile an Verzweigungen aufweisen (sogenannte T-Einheiten), welche Si-OH Gruppen an Seitenketten tragen. Es ist allerdings bevorzugt, dass die Polyidorganosiloxane vorwiegend linear und ohne SI-OH-reaktive Seitenketten ausgebildet sind.

### Wasser

Die Komponente **A** der zweikomponentigen Silikonzusammensetzung umfasst weiterhin bevorzugt zwischen 0.05 Gew.-% und 5.0 Gew.-% Wasser, insbesondere emulgiertes Wasser, bezogen auf Komponente A. Wasser in der Komponente **A** führt zu einer raschen, gleichmässigen Aushärtung der gemischten zweikomponentigen Zusammensetzung und ist wesentlich, um eine erfindungsgemäss rasche und gleichmässige Aushärtung ermöglichen. Bevorzugt ist Wasser mit einer Menge von zwischen 0.1 Gew.-% und 2.5 Gew.-%, insbesondere zwischen 0.1 Gew.-% und 1.5 Gew.-%, bezogen auf Komponente **A,** enthalten.

Wasser kann einfach zugesetzt werden, insbesondere wenn oberflächenaktive Substanzen wie die weiter unten erwähnten Dispersionsadditive **D,** konkret beispielsweise Polyether, vorhanden sind. Bei grösseren Mengen an Wasser könnten jedoch Entmischungsprobleme auftreten.

Das Wasser ist daher in einigen bevorzugen Ausführungsformen nicht in freier Form oder als adsorbiertes Wasser (etwa auf Füllstoffen) enthalten, sondern als Emulsion (beispielsweise in Silikonöl) eingemischt. Dies ermöglicht eine homogenere Einmischung mit geringen Konzentrationsgradienten und nach Applikation gleichmässigerer Aushärtung der gemischten Zusammensetzung. Als vorteilhaft haben sich beispielsweise Wasser/Öl Emulsionen mit 40 bis 60 Gew.-% Wasser, bezogen auf die Emulsion, erwiesen.

### Dispersionsadditiv D

Die Komponente **A** der zweikomponentigen Silikonzusammensetzung enthält bevorzugt zwischen 0.05 und 3.5 Gew.-%, insbesondere zwischen 0.1 und 3.0 Gew.-%, meist bevorzugt zwischen 0.5 und 2.5 Gew.-% Dispersionsadditiv **D,** bezogen auf Komponente **A.**

Dispersionsadditive sind im Bereich der füllstoff- und/oder pigmenthaltigen Silikonformulierungen bekannt. Sie werden auch als Dispergiermittel oder Netzmittel bezeichnet und erleichtern das Einbinden von Feststoffen in eine flüssige oder pastöse Matrix. Grundsätzlich sind alle für Silikone gängigen Dispersionsadditive geeignet, und ihre geeignete Menge für eine bestimmte Formulierung hängt von der Art des Dispersionsadditivs und der relativen Menge an unbeschichteter, hydrophiler Fällungskreide **F** und anderen Bestandteilen, wie z. B. weiteren Füllstoffen und anderen partikulären Inhaltsstoffen, ab.

Die Verwendung von Dispersionsadditiv **D** bietet verschiedene Vorteile. Zunächst erlaubt es die homogene Einformulierung grösserer Mengen an unbeschichteter, hydrophiler Fällungskreide **F** und damit besserer Hitzebeständigkeit der Zusammensetzung. Zudem wird dabei die Viskosität der Zusammensetzung nicht über Mass erhöht, so dass sie noch immer insbesondere maschinell pumpbar und leicht applizierbar bleibt.

Insbesondere in Ausführungsformen, in denen Komponente **A** Wasser enthält, ist gleichzeitige der Einsatz von Dispersionsadditiv **D** bevorzugt.

In bevorzugten Ausführungsformen stellt das Dispersionsadditiv **D eine** polymere Substanz mit mindestens teilweise Polyetheranteilen dar.

Bevorzugt als Dispersionsadditiv **D** sind polymere Substanzen mit mindestens teilweise Polyether-Rückgraten oder -Seitenketten, insbesondere mit Polypropylenglycol-Anteilen. Dabei kann es sich um reine Polyether handeln, beispielsweise Polyetherpolyole wie die Acclaim^{®} Typen von Covestro. Bevorzugt sind weiterhin Polyether-Polysiloxan-Copolymere. Andere Dispersionsadditive sind ebenfalls geeignet, solange sie nicht in unerwünschter Weise mit den Inhaltsstoffen der Silikonzusammensetzung reagieren.

### Unbeschichtete, hydrophile Fällungskreide F

Die Komponente **A** der zweikomponentigen Silikonzusammensetzung umfasst weiterhin, bezogen auf die Komponente **A,** 5 bis 50 Gew.-%, bevorzugt 10 bis 45 Gew.-%, insbesondere 15 bis 40 Gew.-% unbeschichtete, hydrophile Fällungskreide **F.**

Fällungskreide **F** ist eine Kreide (Calciumcarbonat), die über eine Fällungsreaktion in wässrigem Medium synthetisch hergestellt wird. Dies unterscheidet sie von gemahlenen natürlichen Kreiden, die aus Kalkstein- oder Marmorbrüchen gewonnen werden.

Anders als in Silikonzusammensetzungen des Standes der Technik üblich darf die Fällungskreide **F** nicht oberflächenbehandelt, also hydrophobisiert, sein, sondern muss unbehandelt und damit hydrophil vorliegen. Überraschenderweise wurde gefunden, dass nur unbeschichtete, hydrophile Fällungskreide **F** den erfindungsgemässen Effekt der Hochtemperaturstabilität ermöglicht. Beschichtete (hydrophobisierte) Fällungskreiden sind ungeeignet und sogar kontraproduktiv. Daher gilt auch die Einschränkung, dass die Silikonzusammensetzung, falls vorhanden, weniger als 5 Gew.-%, bezogen auf die gesamte Zusammensetzung, beschichtete, hydrophobe Fällungskreide enthalten muss.

Fällungskreiden haben gegenüber gemahlenen Kreiden den Vorteil, dass sie meist feinteiliger und homogener, sowie chemisch reiner sind. Unbehandelte (unbeschichtete) hydrophile Fällungskreiden enthalten oft herstellungsbedingt viel Wasser, was in vielen Silikonzusammensetzungen unerwünscht ist. Im Fall der vorliegenden Erfindung ist dies jedoch unerheblich oder sogar erwünscht. Daher muss Fällungskreide **F** nicht vor Einsatz getrocknet oder auf sonstige Weise aufbereitet werden.

Geeignete unbeschichtete, hydrophile Fällungskreiden **F** sind kommerziell erhältlich, beispielsweise unter den Handelsnamen Schaefer Preacarb^{®} 400 von Schaefer Kalk, oder Magnum Fill SD, SDL, M und H097, sowie Calopake^{®} F von Specialty Minerals.

Die Komponente **A** der zweikomponentigen Silikonzusammensetzung kann weiterhin zusätzliche Additive, wie beispielsweise weitere Füllstoffe, Weichmacher, Pigmente, sowie Formulierungsadditive wie Biodzide oder Thixotropiermittel enthalten. Solche Zusatzstoffe sind dem Fachmann der Silikonformulierung bekannt. Diese Zusatzstoffe können die Verarbeitbarkeit und Mischbarkeit der Komponente **A** und/oder der gemischten zweikomponentigen Silikonzusammensetzung verbessern, sowie die Eigenschaften der ausgehärteten Zusammensetzungen. Sie sind aber nicht wesentlich für die Wirkung der Erfindung.

### Komponente B

Die zweite Komponente **B** der zweikomponentigen Silikonzusammensetzung enthält:
i) bevorzugt mindestens ein nicht kondensierbares Polydiorganosiloxan **W als** Weichmacher;
ii) mindestens ein Organosilan **V** als Vernetzer;
iii) mindestens einen Katalysator **K** für die Vernetzung von Polydiorganosiloxanen;
iv) sowie gegebenenfalls weitere Inhaltsstoffe.

### Weichmacher W

Komponente **B,** und bevorzugt auch Komponente **A,** enthalten insbesondere mindestens ein nicht kondensierbares Polyidiorganosiloxan als Weichmacher **W.** Dabei handelt es sich üblicherweise um ein Polydiorganosiloxan, dessen Endgruppen mit Alkyl- oder Vinylgruppen verschlossen sind und das Polydiorganosiloxan demzufolge keine Kondensations- oder Vernetzungsreaktionen eingehen kann.

Als Weichmacher **W** sind besonders trialkylsilylterminierte Polydialkylsiloxane geeignet, insbesondere trimethylsilylterminierte Polydimethylsiloxane, wie weiter oben bereits beschreiben. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher **W** eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich anstatt der Polysiloxan-Weichmacher, andere organische Verbindungen, wie zum Beispiel bestimmte Kohlenwasserstoffe, Hydroxyl-freie Polyether oder deren Gemische, als Weichmacher **W** einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Silikonzusammensetzung aufweisen.

Bevorzugt werden als Weichmacher **W** Polydimethylsiloxane mit Viskositäten zwischen 1 und 200'000 mPa·s. Besonders bevorzugt sind Viskositäten zwischen 10 und 150'000 mPa·s.

Dabei ist es besonders vorteilhaft und bevorzugt, wenn in der Komponente **A** als Weichmacher **W** trialkylsilylterminierte Polydimethylsiloxane mit Viskositäten zwischen 1 und 10'000 mPa·s, bevorzugt zwischen 10 und 1'000 mPa s eingesetzt werden. Damit können besonders vorteilhafte Viskositäten für die Komponente **A** eingestellt werden, was die Mischung erleichtert.

Es ist weiterhin besonders vorteilhaft und bevorzugt, wenn in der Komponente **B** als Weichmacher **W** trialkylsilylterminierte Polydimethylsiloxane mit Viskositäten zwischen 10'000 und 200'000 mPa s, bevorzugt zwischen 20'000 und 150'000 mPa·s eingesetzt werden. Damit kann eine besonders gute Lagerstabilität und besonders niedrige Tendenz zur Phasenseparation in der Komponente **B** erreicht werden.

Solche Weichmacher **W** sind dem Fachmann der Silikonformulierung bestens bekannt und diese werden beispielsweise unter der Handelsnamenserie Wacker^{®} AK von Wacker Chemie, Deutschland vertrieben und weiter unten detaillierter beschrieben. Diese nicht reaktiven Polydiorganosiloxane werden auch als Silikonöle bezeichnet. Sie sind in verschiedenen Kettenlängen und damit Viskositäten erhältlich und haben vor allem den Zweck, Festkörperbestandteile wie Füllstoffe gut einmischbar und mit den anderen Bestandteilen homogenisierbar zu machen sowie die mechanischen Eigenschaften und Fliesseigenschaften der Zusammensetzung zu verbessern.

Komponente **B** enthält bevorzugt zwischen 10 Gew.-% und 60 Gew.-% an Weichmacher **W.**

Komponente **A** enthält bevorzugt zwischen 1 Gew.-% und 15 Gew.-% an Weichmacher **W.** Komponente **A** benötigt weniger oder gar keinen Weichmacher **W,** da Komponente **A** bereits flüssige Hydroxylgruppen terminierte Polydiorganosiloxane enthält.

Es kann von Vorteil sein, verschiedene solche Weichmacher **W** zu kombinieren, beispielsweise mit unterschiedlichen Viskositäten oder unterschiedlichen Endgruppen.

Bevorzugt enthält Komponente **B** mindestens einen Weichmacher **W** mit Vinylsilan-Endgruppen oder Methylsilan-Endgruppen.

### Katalysator K

Die Komponente **B** der zweikomponentigen Silikonzusammensetzung umfasst weiterhin mindestens einen Katalysator **K** für die Vernetzung von Polydiorganosiloxanen.

Geeignete Katalysatoren **K** sind im Handel erhältlich. Als Katalysatoren **K** eignen sich z.B. Metallkatalysatoren. Metallkatalysatoren können Verbindungen und Komplexe von Elementen der Hauptgruppen I, II, III und IV sowie der Nebengruppen I, II, IV, VI und VII des Periodensystems der Elemente sein. Beispiele für bevorzugte Katalysatoren sind zinnorganische Verbindungen und/oder Titanate bzw. Organotitanate. Es ist möglich und in gewissen Fällen sogar bevorzugt, Mischungen verschiedener Katalysatoren einzusetzen.

Bevorzugte zinnorganische Verbindungen sind Dialkylzinnverbindungen, z.B. Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinndilaurat, Di-n-butylzinnoxid und Di-n-octylzinnoxid.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei bevorzugt diejenigen, welche ausgewählt sind aus der Gruppe bestehend aus Alkoxy, Sulfonat, Carboxylat, Dialkylphosphat und Dialkylpyrophosphat. Bevorzugte Titanate sind beispielsweise Tetrabutyl- oder Tetraisopropyltitanat.

Weiterhin geeignete Titanate weisen mindestens einen mehrzähnigen Liganden, auch Chelatligand genannt, und gegebenenfalls zusätzlich mindestens einen der vorstehend genannten Liganden auf. Der mehrzähnige Ligand ist bevorzugt ein zweizähniger Ligand. Ein Beispiel für einen zweckmäßigen Chelatliganden ist die Acetylacetonatgruppe.

Geeignete Titanate sind beispielsweise unter den Handelsnamen Tyzor^{®} AA, GBA, GBO, AA-75, AA-65, AA-105, DC, BEAT, IBAY von der Firma Dorf Ketal oder unter dem Handelsnamen Tytan^{®} PBT, TET, X85, TAA, ET, S2, S4 oder S6 von der Firma Borica kommerziell erhältlich.

In einer bevorzugten Ausführungsform der Erfindung ist Katalysator **K ein** Zinnkomplex mit zwei Mercaptidliganden nach Formel (V), 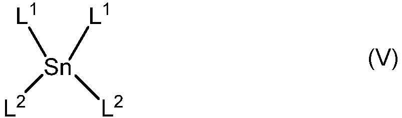 wobei Liganden L¹ unabhängig voneinander für über Schwefel koordinierte Alkylmercaptipde stehen, insbesondere C₆ bis C₁₆ Alkylmercaptide, bevorzugt C₈ bis C₁₄ Alkylmercaptide, meist bevorzugt C₁₀ bis C₁₂ Alkylmercaptide, wobei Liganden L¹ optional Methyldialkoxysilagruppen, bevorzugt Methyldimethoxysilangruppen aufweisen, und Liganden L² unabhängig voneinander für C₃ bis C₁₈ Alkylliganden stehen, insbesondere für C₆ bis C₁₄ Alkylliganden, bevorzugt für C₆ bis C₁₂ Alkylliganden.

Katalysator **K** ist in diesen Ausführungsformen also ein Sn(IV)-Komplex mit zwei C₃ bis C₁₈ Alkylliganden L², insbesondere zwei C₆ bis C₁₄ Alkylliganden L².

Es hat sich herausgestellt, dass sehr kurze Alkylliganden, wie beispielsweise Methylliganden, zu einer schlechten Lagerstabilität der Komponente **B** führen und daher als Ligand L² nicht geeignet sind.

Bevorzugt sind Liganden L² C₆ bis C₁₄ Alkylliganden, insbesondere Phenyl-, Hexyl-, Octyl-, oder Dodecylliganden, meist bevorzugt Octylliganden. Diese bilden besonders lagerstabile Komplexe und eine besonders gute erfindungsgemässe Aktivität in der Zusammensetzung.

Weiterhin weist Katalysator **K** in diesen Ausführungsformen zwei über die Schwefelatome koordinierte Mercaptidlinganden L¹, insbesondere C₆ bis C₁₆ Alkylmercaptide, wobei Liganden L¹ optional Methyldialkoxysilagruppen, bevorzugt Methyldimethoxysilangruppen aufweisen, auf. Der Begriff Mercaptid wird synonym mit dem Begriff Thiolat verwendet und beschreibt deprotonierte R-S⁻ Liganden, wobei R ein organischer Rest ist.

Es hat sich herausgestellt, dass die beiden Liganden L¹ nicht einen einzigen bidentaten Liganden mit zwei Thiolatgruppen darstellen können, da der Chelateffekt die erfindungsgemässe Wirkung möglicherweise beeinträchtigt. Daher müssen Liganden L¹ zwei einzeln koordinierte Alkylmercaptidliganden sein. Es ist bevorzugt, dass diese Liganden keine weiteren an Zinn koordinierbare Heteroatome aufweisen, wie beispielsweise Amino- oder Carboxylatgruppen. Bevorzugt umfassen Liganden L¹ keine funktionellen Gruppen mit Heteroatomen, ausser Methyldialkoxysilangruppen. Methyldialkoxysilangruppen, insbesondere Methyldimethoxysilangruppen, können hingegen vorteilhaft sein, da sie sich ins Polymergerüst einbauen können und dadurch die Mobilität der Schwefelliganden einschränken. Dies hat den Vorteil, dass unerwünschte Migrationseffekte und/oder allfällige Vergilbungen verhindert werden. Es ist allerdings bevorzugt, wenn die Methylalkoxysilangruppen, falls vorhanden, dieselben Alkoxysilangruppen aufweisen wie die Vernetzer **V.**

Weiterhin hat sich herausgestellt, dass Liganden L¹ mit Trialkoxysilangruppen nicht geeignet sind, da sie die Wirksamkeit des Katalysators und die Lagerstabilität der Zusammensetzung beeinträchtigen.

Bevorzugt sind Liganden L¹ Dodecylthiolatliganden, Octadecylthiolatliganden, oder 3-Mercaptopropyl-methyldimethoxysilan-Liganden, welche über das Schwefelatom koordiniert sind.

Besonders bevorzugt sind Dodecylthiolatliganden. Diese führen zu einem besonders wirksamen, besonders lagerstabilen Katalysator **K.** Dodecylthioliganden haben den weiteren Vorteil, dass sie, im Vergleich zu Liganden mit kürzeren Alkylketten, einen kaum wahrnehmbaren Geruch haben, aber trotzdem, im Vergleich zu Liganden mit längeren Alkylketten, bei Raumtemperatur flüssig und somit gut handhabbar sind.

Weiterhin besonders bevorzugt sind 3-Mercaptopropyl-methyldimethoxysilan-Liganden, welche über das Schwefelatom koordiniert sind.

Diese führen zu einem besonders wirksamen Katalysator K und zu besonders niedriger Vergilbungsneigung der ausgehärteten Zusammensetzung.

In einer besonders bevorzugten Ausführungsform von Katalysator **K** stehen in der Formel (V) beide Liganden L¹ für Dodecylmercaptid und beide Liganden L² für Octyl.

In einer weiteren besonders bevorzugten Ausführungsform von Katalysator **K** stehen in der Formel (V) beide Liganden L¹ für 3-Mercaptopropyl-methyldimethoxysilan und beide Liganden L² für Octyl.

Solche Katalysatoren **K** können einfach hergestellt werden, indem beispielsweise Dialkylzinndiacetate mit den entsprechenden Mercaptanliganden in einem molaren Verhältnis von ungefähr 2:1 (Ligand : Zinnkomplex) unter Luftausschluss miteinander während 24h bei 23 °C verrührt werden. Dabei durch Ligandenaustausch entstehende Nebenprodukte, wie beispielsweise Essigsäure, können vorteilhafterweise, zum Beispiel destillativ bei erniedrigtem Druck, entfernt werden.

Selbstverständlich ist es möglich oder in gewissen Fällen sogar bevorzugt, Mischungen verschiedener Katalysatoren **K** einzusetzen.

Der Anteil des Katalysators **K** für die Vernetzung von Polydiorganosiloxanen beträgt vorzugsweise 0.05 bis 10 Gew.-%, insbesondere 0.1 bis 5 Gew.-%, bevorzugt 0.25 bis 4 Gew.-%, bezogen auf Komponente **B** der zweikomponentigen Silikonzusammensetzung.

Die Menge an Katalysator **K** beeinflusst die Topfzeit und den einstellbaren Bereich der Topfzeit der gemischten zweikomponentigen Zusammensetzung. Je höher der Gehalt an Katalysator, desto kürzer wird tendenziell die einstellbare Topfzeit sowie desto schneller wird die anschliessende Aushärtung. Diese Effekte werden jedoch in hohem Masse auch von der Wahl der Vernetzer beeinflusst. Darauf wird weiter unten eingegangen.

Die Komponente **B** der zweikomponentigen Silikonzusammensetzung enthält weiterhin mindestens einen, bevorzugt mehrere verschiedene Vernetzer für Silikonzusammensetzungen. Als Vernetzer werden dabei organische Siliciumverbindungen mit hydrolysierbaren Alkoxysilangruppen bezeichnet. Die vorliegende Erfindung unterscheidet drei verschiedene Vernetzertypen **V1, V2** und **V3,** welche im Folgenden näher erläutert werden.

Es ist vorteilhaft und bevorzugt für die Wirkung der vorliegenden Erfindung, wenn alle Vernetzer in der Zusammensetzung dieselben Alkoxysilangruppen tragen. Beispielsweise können alle Vernetzer Methoxysilangruppen oder alle Vernetzer Ethoxysilangruppen aufweisen. Mischungen verschiedener Alkoxysilangruppen sind meist nicht vorteilhaft und können den Effekt der Erfindung behindern oder gar verhindern.

Es können jedoch durchaus Mischungen von Vernetzern mit Methoxy- und Ethoxysilangruppen eingesetzt werden, beispielsweise wenn der am langsamsten hydrolysierende Vernetzer **V** anstatt Methoxysilangruppen Ethoxysilangruppen aufweist und alle anderen, schnelleren Vernetzer **V** Methoxysilangruppen. Auch wenn ein Gemisch von Vernetzern **V** eingesetzt wird, können Vernetzer mit einem sehr kleinen Anteil an der Mischung andere Alkoxysilangruppen aufweisen als der Rest der Vernetzer, die jedoch bezüglich Alkoxysilangruppen dann gleichartig sein sollten. In solchen Mischungen wird der Effekt der Erfindung nicht beeinträchtigt.

### Vernetzer V1

Komponente **B** der erfindungsgemässen Zusammensetzung enthält in einigen Ausführunsformen zwischen 1 und 50 Gew.-%, bezogen auf Komponente **B,** mindestens eines ersten Organosilans **V1** nach Formel (I), 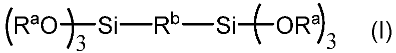
wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht.

Bevorzugt steht R^{a} für ein Wasserstoffatom oder einen Methyl- oder Ethylrest. Am meisten bevorzugt steht R^{a} für ein Wasserstoffatom oder einen Methylrest. Silane **V1** mit Ethylresten als R^{a}, welche nach Hydrolyse in Wasserstoffatome überführt werden, sind besonders vorteilhaft, weil sie einerseits eine besonders gut kontrollierbare Topfzeiteinstellung ermöglichen, trotzdem sehr rasch aushärten, und darüber hinaus keine giftigen Methanolemissionen verursachen.

Silane **V1** mit Methylresten als R^{a}, welche nach Hydrolyse in Wasserstoffatome überführt werden, sind besonders vorteilhaft, weil sie nach Ende der Topfzeit besonders rasch aushärten, und trotzdem lange Topfzeiten und lange Mischeroffenzeiten ermöglichen.

Bevorzugt steht R^{b} für einen linearen Alkylrest oder Alkenylrest mit 2 bis 12 Kohlenstoffatomen, bevorzugt mit 2 bis 6 Kohlenstoffatomen, meist bevorzugt einen Ethylrest, einen Propylrest, einen Ethylenrest oder einen Propenylrest.

Organosilan **V1** ist nicht unbedingt nötig für den Effekt der Erfindung, weist aber in Kombination mit Organosilan **V2** den Vorteil auf, dass es bei Anwesenheit in der Formulierung die Topfzeit besser einstellbar macht. Unter Verwendung eines Organosilans **V1** kann die maximal mögliche Topfzeit der Zusammensetzung erhöht werden, ohne jedoch die Aushärtegeschwindigkeit nach Ende der Topfzeit wesentlich zu verlangsamen.

Bevorzugte Ausführungsformen der erfindungsgemässen Zusammensetzung enthalten zwischen 10 Gew.-% und 30 Gew.-%, bevorzugt zwischen 12 Gew.-% und 20 Gew.-%, an Organosilan **V1,** bezogen auf Komponente **B.**

### Vernetzer V2

Komponente **B** der erfindungsgemässen Zusammensetzung enthält in bevorzugten Ausführungsformen zwischen 2 und 60 Gew.-%, bezogen auf Komponente **B,** mindestens eines Organosilans V2 nach Formel (II), 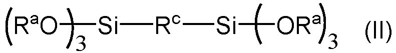
wobei R^{a} dieselbe Bedeutung wie für das Organosilan **V1** beschrieben aufweist, und
R^{c} für einen divalenten, linearen oder verzweigten Alkylrest mit 2 bis 20 Kohlenstoffatomen steht, der mindestens eine sekundäre Aminogruppe sowie optional eine Hydroxylgruppe sowie einen Ethersauerstoff enthält.

Bevorzugt besitzt Organosilan **V2** eine Struktur wie in Formel (IIa) beschrieben, 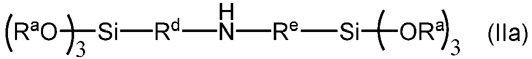
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht, der optional eine sekundäre Aminogruppe enthält.

Bevorzugte Ausführungsformen der erfindungsgemässen Zusammensetzung enthalten zwischen 5 Gew.-% und 50 Gew.-%, bevorzugt zwischen 10 Gew.-% und 45 Gew.-%, an Organosilan **V2,** bezogen auf Komponente **B.**

In einer bevorzugten Ausführungsform handelt es sich beim Organosilan **V2** um ein Organosilan **V2a,** bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest.

In einer anderen besonders bevorzugten Ausführungsform handelt es sich beim Organosilan **V2** um ein Organosilan **V2b,** bei dem Rest R^{e} in Formel (IIa) für einen divalenten, linearen oder verzweigten Alkylrest mit 2 bis 10 Kohlenstoffatomen steht, der optional eine sekundäre Aminogruppe enthält, insbesondere einen Propylrest oder einen Cs-Alkylrest, der eine sekundäre Aminogruppe in der Kohlenstoffkette aufweist, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind. Dabei steht die NH Gruppe in Formel (IIb) für die NH Gruppe in Formel (IIa) und die gestrichelte Linie am Sauerstoffatom ist an den divalenten, linearen oder verzweigten Alkylrest mit 2 bis 10 Kohlenstoffatomen, insbesondere den Propylrest, gebunden.

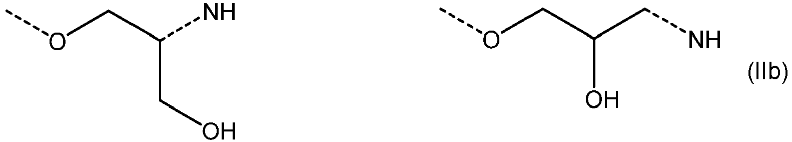

Organosilane **V2a** sind kommerziell erhältlich, beispielsweise unter den Handelsnamen Dynasylan^{®} 1122 und Dynasylan^{®} 1124 (Evonik). Dynasylan^{®} 1124 ist Bis(trimethoxysilylpropyl)amin und Dynasylan^{®} 1122 ist Bis(trimethoxysilylpropyl)amin.

Organosilane **V2b** sind leicht aus kommerziell verfügbaren Organosilanen herstellbar, beispielsweise aus der Reaktion einer äquimolaren Menge an 3-Aminopropyltriethoxysilan mit 3-Glyxidoxypropyltriethoxysilan unter Wasserausschluss bis zur vollständigen Umsetzung der Epoxygruppen.

Eine besonders bevorzugte Ausführungsform von Organosilan **V2b** weist in Formel (IIa) für Rest R^{e} einen divalenten C₅ Alkylrest auf, welcher eine sekundäre Aminogruppe in der Kohlenstoffkette aufweist und für Rest R^{d} einen linearen, divalenten C₆ Alkylrest, welcher einen Ethersauerstoff in der Kohlenstoffkette aufweist sowie eine Hydroxylgruppe aufweist. Dieses besitzt bevorzugt ausschliesslich Methoxysilangruppen als Alkoxysilangruppen. Ein solches Organosilan ist beispielsweise herstellbar aus der Reaktion einer äquimolaren Menge von N-(2-Aminoethyl)-3-aminopropyltrimethoxysilan (z.B. Geniosil^{®} GF 91, Wacker) mit 3-Glyxidoxypropyltrimethoxysilan (z.B. Geniosil^{®} GF 80, Wacker) unter Wasserausschluss bis zur vollständigen Umsetzung der Epoxygruppen.

In bevorzugten Ausführungsformen der erfindungsgemässen Zusammensetzung umfasst Organosilan **V2** ein Organosilan **V2a** wie vorgängig beschrieben, wobei Organosilan **V2a** in einer Menge von zwischen 5 Gew.-% und 20 Gew.-% bezogen auf Komponente **B** enthalten ist, und weiterhin umfasst Organosilan **V2** ein Organosilan **V2b** wie vorgängig beschreiben, wobei Organosilan **V2b** in einer Menge von zwischen 5 Gew.-% und 20 Gew.-% bezogen auf Komponente **B** enthalten ist, und die Zusammensetzung umfasst weiterhin mindestens ein Organosilan **V3** mit einer Menge von zwischen 2.5 Gew.-% und 20 Gew.-% bezogen auf Komponente **B,** und der Katalysator **K** ist in einer Menge von zwischen 0.1 Gew.-% und 1.5 Gew.-%, bezogen auf Komponente **B,** in der Komponente **B** enthalten.

Diese Ausführungsform ermöglicht eine besonders geeignete, ausreichend lange Topfzeit und Mischeroffenzeit und eine besonders rasche Aushärtung nach Ende der Topfzeit und eine besonders gute Lagerstabilität insbesondere der Komponente **B.**

In bevorzugten Ausführungsformen der erfindungsgemässen Zusammensetzung wird eine Mischung aus Organosilan **V2a** und Organosilan **V2b** als Organosilan **V2** eingesetzt. In diesen Ausführungsformen beträgt der Gehalt an Katalysator **K** bevorzugt zwischen 0.1 Gew.-% und 2 Gew.-%, insbesondere zwischen 0.2 Gew.-% und 1 Gew.-%, bezogen auf Komponente **B.** Dies ermöglicht eine sehr genau einstellbare, anwenderfreundliche aber doch kurze bis mittlere Topfzeit und eine sehr rasche Aushärtung und ist besonders für maschinelle, automatisierte Applikation mit kurzen Taktzeiten geeignet, sowie besonders gut für eine frei wählbare Topfzeit mittels verschiedenen Mischungsverhältnissen der Komponente **A** und **B.** Dies ist besonders vorteilhaft für eine flexible Applikation oder bei komplexen Anwendungen, wo eine wechselnde Topfzeit aber stets identische Endeigenschaften der gehärteten Zusammensetzung erwünscht ist.

In dieser Ausführungsform werden die Organosilane **V2a** und **V2b** bevorzugt im Gewichtsverhältnis zwischen 1:2 und 2:1 in der Formulierung eingesetzt. Bevorzugte Ausführungsformen dieser Ausführungsform der erfindungsgemässen Zusammensetzung enthalten zwischen 5 Gew.-% und 25 Gew.-%, bevorzugt zwischen 7.5 Gew.-% und 22.5 Gew.-%, an Organosilan **V2a,** bezogen auf Komponente **B,** sowie zwischen 0 Gew.-% und 25 Gew.-%, bevorzugt zwischen 5 Gew.-% und 22.5 Gew.-%, an Organosilan **V2b,** bezogen auf Komponente **B.**

### Vernetzer V3

Die Komponente **B** der zweikomponentigen Silikonzusammensetzung umfasst weiterhin bevorzugt zwischen 0 und 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen. Diese dienen ebenfalls als Vernetzer, sind jedoch optional.

Das zusätzliche Organosilan **V3** ist insbesondere ein Silan der Formel (III).

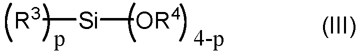

Der Rest R³ steht dabei unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁴ steht für einen Rest R^{a} wie weiter oben beschrieben.

Der Index p steht für einen Wert von 0 bis 4, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe, also beispielsweise eine Hydroxylgruppe aufweisen. Insbesondere steht p für einen Wert von 0, 1 oder 2, bevorzugt für einen Wert von 0.

Für die Wahl des Silans der Formel (III) als Vernetzer für Polydiorganosiloxane können unterschiedliche Anforderungen an die zweikomponentige Silikonzusammensetzung ausschlaggebend sein. Einerseits spielt die Reaktivität des Silans eine wichtige Rolle, andererseits können auch toxikologische Gründe für die Wahl des Vernetzers ausschlaggebend sein.

Beispiele geeigneter Silane der Formel (III) sind Vinlytrimethoxysilan, Methyltrimethoxysilan, Chlormethyltrimethoxysilan, Ethyltrimethoxysilan, Propyltrimethoxysilan, Octyltrimetoxysilan, Vinyltriethoxysilan, Methyltriethoxysilan, Phenyltriethoxysilan, Methyltripropoxysilan, Phenyltripropoxysilan, Octyltriethoxysilan, Tetramethoxysilan, Tetraethoxysilan, Tetra-n-propoxysilan oder Tetra-n-butoxysilan.

Besonders bevorzugt handelt es sich beim Silan der Formel (III) um Methyltrimethoxysilan, Dimethyltrimethoxysilan oder Tetramethoxysilan oder deren Mischung, ganz besonders bevorzugt Methyltrimethoxysilan, Octyltrimethoxysilan, oder Mischungen davon.

Weiterhin können die Silane, die in Komponente B enthalten sind, auch bereits teilweise (ein Teil aller R⁴ = H) oder vollständig hydrolysiert (alle R⁴ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Silikonzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octamethoxytrisiloxan, Octaethoxytrisiloxan, Octa-n-butoxytrisiloxan, Decamethoxytetrasiloxan und Decaethoxytetrasiloxan.

Dementsprechend enthält Komponente **B** in bevorzugten Ausführungsformen zudem oligomere Siloxane, gebildet aus der Kondensation von Silanen der Formel (III). Solche Siloxane können auch in Komponente **A** in geringer Menge enthalten sein, solange sie nicht eine vorzeitige Vernetzung bewirken.

Selbstverständlich kann als Vernetzer für die zweikomponentige Silikonzusammensetzung auch eine beliebige Mischung der vorhergehend genannten Silane eingesetzt werden.

Der Anteil des Organosilans **V3** beträgt vorzugsweise 0.1 bis 25 Gew.-%, insbesondere 0.5 bis 20 Gew.-%, bevorzugt 1 bis 15 Gew.-%, bezogen auf Komponente **B** der zweikomponentigen Silikonzusammensetzung.

Die zweikomponentige Silikonzusammensetzung kann in einer oder beiden der Komponenten **A** und **B** gegebenenfalls noch weitere Bestandteile enthalten. Derartige zusätzliche Bestandteile sind insbesondere Weichmacher **W** wie weiter oben beschrieben, welche zwingend sind in Komponente **B,** anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Weiterhin ist es vorteilhaft, alle genannten, in der zweikomponentigen Silikonzusammensetzung gegebenenfalls vorhandenen, Bestandteile so auszuwählen, dass die Lagerstabilität der beiden Komponenten der zweikomponentigen Silikonzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Silikonzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Vorzugsweise weist die Zusammensetzung in einer oder beiden der Komponenten **A** und **B** weiterhin mindestens einen zusätzlichen Füllstoff (neben Fällungskreide **F)** auf. Der Füllstoff kann sowohl die rheologischen Eigenschaften der nicht ausgehärteten Zusammensetzung als auch die mechanischen Eigenschaften und die Oberflächenbeschaffenheit der ausgehärteten Zusammensetzung beeinflussen. Es können sowohl aktive als auch passive Füllstoffe in der zweikomponentigen Silikonzusammensetzung eingesetzt werden. Bei aktiven Füllstoffen treten chemische oder physikalische Wechselwirkungen mit dem Polymer auf, bei passiven Füllstoffen treten diese nicht oder nur in untergeordnetem Umfang auf.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, oder mit vorzugsweise hydrophoben Silanen, bzw. Siloxanen beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

In einer bevorzugten Ausführungsform enthält die Silikonzusammensetzung hochdisperse Kieselsäuren aus Pyrolyseprozessen oder gefällte und/oder gemahlene Calciumcarbonate, insbesondere hydrophob beschichtete, als zusätzlichen Füllstoff.

Komponente A enthält bevorzugt mindestens einen Füllstoff, insbesondere gemahlene, bevorzugt hydrophob beschichtete, Calciumcarbonate. Komponente B enthält bevorzugt hochdisperse Kieselsäuren aus Pyrolyseprozessen.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte zweikomponentige Silikonzusammensetzung.

Es muss jedoch sichergestellt werden, dass die Silikonzusammensetzung, falls vorhanden, weniger als 5 Gew.-%, bezogen auf die gesamte Zusammensetzung, beschichtete, hydrophobe Fällungskreide enthält. Bevorzugt enthält die Zusammensetzung weniger als 1 Gew.-%, bezogen auf die gesamte Zusammensetzung, insbesondere gar keine, beschichtete, hydrophobe Fällungskreide.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Gewisse dieser Haftvermittler fallen bereits unter die Definition des Vernetzers **V3,** müssen also diesbezüglich berücksichtigt werden. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.

Es gilt jedoch die Massgabe, dass die Zusammensetzung weniger als 10 mol-%, bezogen auf die Menge an Organosilan **V2,** an Organosilanen mit Epoxidgruppen, bzw. Glycidoxygruppen, enthält. Bevorzugt enthält die Zusammensetzung weniger als 5 mol-%, insbesondere weniger als 1 mol-%, bezogen auf die Menge an Organosilan **V2,** an Organosilanen mit Epoxidgruppen. Die Anwesenheit von Organosilanen mit Epoxygruppen in Mengen über diesen Bereichen kann dazu führen, dass der erfindungsgemässe Effekt signifikant behindert wird und die Zusammensetzung nicht mehr richtig aushärtet.

Es ist dem Fachmann klar, dass bei der Verwendung von Silanen als Haftvermittler die Möglichkeit besteht, dass diese je nach Bedingungen, beispielsweise Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers, welcher bevorzugt nicht unter die Definition von Vernetzer **V3** oder **V2b** fällt, beträgt vorzugsweise 0.1 bis 15 Gew.-%, insbesondere 1 bis 10 Gew.-%, bevorzugt 1 bis 5 Gew.-%, der gesamten zweikomponentigen Silikonzusammensetzung. In bevorzugten Ausführungsformen, insbesondere unter Verwendung von Organosilanen **V2** und/oder Vernetzern **V3,** welche Haftvermittlerwirkung aufweisen können, enthält die Zusammensetzung jedoch vorzugsweise keine weiteren Haftvermittler.

Dem Fachmann ist bestens bekannt, dass Bestandteile wie sie insbesondere vorhergehend aufgeführt sind nicht nur eine einzige, ihnen zugeschriebene Funktion oder Wirkung aufweisen können. Vielmehr ist es üblich, dass ein einzelner Bestandteil oder eine einzelne Verbindung mehrere Funktionen aufweist. So sind beispielsweise manche Haftvermittler auch Vernetzer oder Füllstoffe gleichzeitig auch Rheologiemodifikatoren oder dergleichen. Beispielsweise weisen die Organosilane **V2,** und in besonderem Masse **V2b,** sowie gewisse Vernetzer **V3** eine gute Haftvermittlerwirkung auf.

In bevorzugten Ausführungsformen sind die weiteren Inhaltsstoffe in Komponente **A** und/oder Komponente **B** ausgewählt aus nicht reaktiven Polydiorganosiloxanen, weiteren Füllstoffen, Pigmenten, Stabilisatoren, Rheologieadditiven, sowie Bioziden.

Die erfindungsgemässe zweikomponentige Silikonzusammensetzung wird typischerweise in einer Verpackung aufbewahrt, welche zwei voneinander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Insbesondere wird die erfindungsgemässe zweikomponentige Silikonzusammensetzung so eingesetzt, dass das Gewichtsverhältnis der Komponente **A** zu Komponente **B** ≥ 1:1, insbesondere von 2:1 bis 20:1, bevorzugt von 3:1 bis 16:1, beträgt.

Ein Vorteil des Einsatzes der Komponenten **A** und **B** im beschriebenen, bevorzugten Gewichtsverhältnis ist, dass bestehende Anlagen zur Förderung und Applikation von zweikomponentigen Silikonzusammensetzungen in dieser Art und Weise sehr weit verbreitet sind und eine Umrüstung der Anlagen auf die Applikation der Komponenten **A** und **B** im Gewichtsverhältnis von beispielsweise 1:1 auf Verbraucherseite mit hohem Aufwand verbunden wäre.

In denselben oder anderen bevorzugten Ausführungsformen wird das Mischverhältnis über das Volumen der Komponenten **A** und **B** gesteuert oder festgelegt. Dies ist insbesondere bei automatisierter Applikation mit individuellem Pumpen der beiden Komponenten und Zuführen zu einem statischen oder dynamischen Mischer praktikabel und vorteilhaft. In solchen Fällen beträgt das Volumenmischverhältnis der Komponente **A** zu Komponente **B** bevorzugt ≥ 1:1, insbesondere von 1.5:1 bis 20:1, bevorzugt von 2:1 bis 16:1, beträgt.

Bei automatisiertem Pumpen und Mischen ist es in einigen Ausführungsformen vorteilhaft, wenn sich die Volumenanteile der Komponenten **A** und **B** nicht übermässig unterscheiden, um eine möglichst homogene Mischung zu gewährleisten. In einigen solchen Ausführungsformen ist das Volumenmischverhältnis der Komponente **A** zu Komponente **B** bevorzugt von 1.1:1 bis 5:1, insbesondere von 1.5:1 bis 3:1, am meisten bevorzugt von 1.8:1 bis 2.5:1.

Weiterhin bevorzugt umfasst die Komponente **B** keine vernetzbaren Polydiorganosiloxane. Der Vorteil davon ist eine bessere Lagerstabilität der Komponente **B.**

Insbesondere Komponente **B** der vorhergehend beschriebenen zweikomponentigen Silikonzusammensetzung wird unter Ausschluss von Feuchtigkeit hergestellt und aufbewahrt. Getrennt voneinander sind die beiden Komponenten lagerstabil, das heisst, sie können unter Ausschluss von Feuchtigkeit in einer geeigneten Verpackung oder Anordnung, wie sie vorhergehend beschreiben wurde, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Silikonzusammensetzung werden die Komponenten **A** und **B,** beispielsweise durch Rühren, Kneten Walzen oder dergleichen, insbesondere jedoch über einen Statikmischer, miteinander vermischt. Dabei kommen die Hydroxylgruppen des Hydroxylgruppen terminierten Polydiorganosiloxans **P** in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt. Der Kontakt der Silikonzusammensetzung mit Wasser, insbesondere der Kontakt von Wasser, das bevorzugt in der Komponente **A** enthalten ist, mit den Vernetzern **V,** bei der Applikation kann die Vernetzung ebenfalls begünstigen, da durch Reaktion des Wassers mit den hydrolysierbaren Gruppen des Vernetzers Silanolgruppen gebildet werden, deren Reaktivität gegenüber den Hydroxylgruppen des Polydiorganosiloxans **P** erhöht ist. Die Aushärtung der zweikomponentigen Silikonzusammensetzung erfolgt insbesondere bei Raumtemperatur.

Bei der Vernetzung der zweikomponentigen Silikonzusammensetzung entstehen als Reaktionsprodukte der Kondensationsreaktion insbesondere auch Verbindungen der Formel HO-R^{a}, wobei R^{a} bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird, beeinträchtigen. Meist bevorzugt handelt es sich beim Reaktionsprodukt der Formel HO-R^{a} um eine Verbindung, welche sich leicht aus der vernetzenden oder der bereits vernetzten Zusammensetzung verflüchtigt.

Weiterhin betrifft die Erfindung eine gehärtete Silikonzusammensetzung wie sie erhältlich ist aus einer vorhergehend beschriebenen zweikomponentigen Silikonzusammensetzung durch Mischen der Komponente **A** mit der Komponente **B.**

Weiterhin betrifft die Erfindung die Verwendung von zweikomponentigen Silikonzusammensetzungen, wie sie vorhergehend beschrieben sind, als Klebstoff, Dichtstoff, als Beschichtung oder als Gussmasse. Bevorzugt wird die erfindungsgemässe Zusammensetzung als Klebstoff verwendet.

Bevorzugt wird die erfindungsgemässe zweikomponentige Silikonzusammensetzung als Klebstoff, Dichtstoff, Beschichtung oder als Gussmasse verwendet, insbesondere für die Herstellung oder Reparatur von Fassaden, Brandschutzfugen, Fenstern, Isolierglas, Solaranlagen, Automobilen, Zügen, Bussen, Schiffen, weisser, brauner und roter Ware, elektronischen Bauteilen oder Sanitäranlagen oder für den Bau, besonders bevorzugt für Fahrzeugteile aus dem Motor- oder Auspuffbereich, Backöfen, Mikrowellen, Bügeleisen, Rundfunkempfänger, Radiatoren und Wasserinstallationen.

Besonders bevorzugt wird die zweikomponentige Silikonzusammensetzung als Klebstoff in der industriellen Fertigung verwendet.

Insbesondere wird die zweikomponentige Silikonzusammensetzung für Hochtemperaturanwendungen verwendet, bei denen die gehärtete Silikonzusammensetzung zumindest zeitweise oder dauerhaft Temperaturen von mehr als 150°C und insbesondere mehr als 200°C ausgesetzt wird. «Dauerhaft» bedeutet hier mindestens 500h, insbesondere mindestens 1000h.

Die erfindungsgemässe zweikomponentige Silikonzusammensetzung wird insbesondere verwendet in einem Verfahren des Verklebens zweier Substrate **S1** und **S2** umfassend die Schritte
a) Applikation einer zweikomponentigen Silikonzusammensetzung gemäss vorhergehender Beschreibung auf ein Substrat **S1** und/oder ein Substrat **S2;**
b) Kontaktieren der Substrate **S1** und **S2** über die applizierte Zusammensetzung innerhalb der Offenzeit der Zusammensetzung;
c) Aushärtung der Zusammensetzung durch Reaktion der Komponenten **A** und **B;**
wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
a') Applikation einer zweikomponentigen Silikonzusammensetzung gemäss vorhergehender Beschreibung auf ein Substrat **S1** und/oder zwischen zwei Substrate **S1** und **S2;**
b') Aushärtung der Zusammensetzung durch Reaktion der Komponenten **A** und **B;**
wobei die Substrate **S1** und **S2** gleich oder verschieden voneinander sind.

Es ist dem Fachmann selbstverständlich klar, dass unmittelbar vor oder während der Applikation der zweikomponentigen Zusammensetzung die beiden Komponenten **A** und **B** miteinander vermischt werden müssen.

Die erfindungsgemässe zweikomponentige Silikonzusammensetzung weist bevorzugt eine pastöse Konsistenz mit strukturviskosen Eigenschaften auf. Eine solche Zusammensetzung wird mit einer geeigneten Vorrichtung auf das Substrat aufgetragen, bevorzugt in Form einer Raupe, wobei diese vorteilhaft eine im Wesentlichen runde oder dreieckige Querschnittsfläche aufweist.

Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Als Substrate **S1** und/oder **S2** eignen sich insbesondere Substrate, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polyethylen, Polyamid, Polymethyl-(meth)acrylat, Polyester, Epoxidharz, Farbe und Lack.

Die zweikomponentige Silikonzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung.

Bevorzugt wird die zweikomponentige Silikonzusammensetzung im Fensterbau und im Fassadenbau verwendet, insbesondere im Fassadenbau.

Weiterhin betrifft die Erfindung einen Artikel, welcher eine zumindest teilweise gehärtete Silikonzusammensetzung gemäss vorhergehender Beschreibung aufweist, wobei es sich bei diesem Artikel insbesondere um ein Bauwerk, ein Industriegut oder ein Transportmittel, insbesondere ein Gebäude, oder ein Teil davon handelt.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backöfen, Scheinwerfer, Nebelleuchter oder Solarpanels. Weiterhin betrifft die vorliegende Erfindung ein Verfahren zur Einstellung der Topfzeit bei gleichbleibenden mechanischen Eigenschaften nach Aushärtung von einer zweikomponentigen Silikonzusammensetzung wie vorgängig beschreiben, dadurch gekennzeichnet, dass das Mischverhältnis von Komponente **A** zu Komponente **B** bezüglich Gewicht im Bereich von Komponente **A** zu Komponente **B** von 1:1 bis 25:1, insbesondere von 2:1 bis 20:1, bevorzugt von 3:1 bis 16:1 beliebig ausgewählt wird.

Mit Hilfe dieses Verfahrens ist es insbesondere auch möglich, die Topfzeit einer erfindungsgemässen zweikomponentigen Silikonzusammensetzung innerhalb breiter Grenzen allein durch das Mischverhältnis der beiden Komponenten **A** und **B** einzustellen. Nach Ende der eingestellten Topfzeit härtet die Zusammensetzung aussergewöhnlich rasch und sehr gleichmässig aus. Unabhängig vom gewählten Mischverhältnis sind die Endeigenschaften, insbesondere Mechanik, der ausgehärteten Zusammensetzung weitgehend gleich. Dies ist äusserst vorteilhaft und erlaubt es einem Anwender, eine flexible, aber sehr genau kontrollierbare Topfzeit einzustellen und zu variieren, ohne die Komponenten **A** und **B** der Zusammensetzung auswechseln zu müssen und allein durch das Einstellen des Mischverhältnisses, z.B. durch veränderte Förderleistung in einer Pumpe.

Somit kann eine Optimierung der Taktzeiten auch bei variierenden Prozessbedingungen eingehalten werden, ohne das Silikonmaterial wechseln zu müssen.

Die erfindungsgemässe Zusammensetzung härtet nach Ende der Topfzeit aussergewöhnlich rasch aus. Dabei ist in bevorzugten Ausführungsformen der erfindungsgmässen Silikonzusammensetzung das Verhältnis von Topfzeit zu Klebefreiheit (Zeit, bis die Oberfläche der applizierten Silikonzusammensetzung durch weit fortgeschrittene Aushärtung klebefrei geworden ist) < 2.5, insbesondere zwischen 1.1 und 2.3, bevorzugt zwischen 1.2 und 2.1. Dies ermöglicht eine sehr effiziente Prozessführung, da die Zusammensetzung nach Applikation extrem rasch aushärtet und das Substrat, auf dem die Zusammensetzung appliziert worden ist, sofort weiterverarbeitet oder transportiert werden kann.

Zweikomponentige Silikonzusammensetzungen des Standes der Technik weisen dagegen üblicherweise entweder eine sehr lange Topfzeit und gleichzeitig eine sehr lange Aushärtezeit auf, oder aber eine sehr rasche Aushärtung und dafür eine extrem kurze, anwenderunfreundliche Topfzeit. Die vorliegende Erfindung erlaubt es, je nach Bedürfnis lange oder kurze Topfzeiten einzustellen; sie erlauben aber in jedem Fall eine sehr rasche Aushärtung nach der Applikation.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Silikonzusammensetzungen

Es wurden die folgenden Zusammensetzungen hergestellt:
Als Komponenten **A** und **B** wurden die in den Tabellen 1 und 2 aufgeführten Bestandteile in den angegebenen Gewichtsprozenten in einem Dissolver bei Raumtemperatur unter Inertatmosphäre miteinander vermischt und eingerührt, bis eine makroskopisch homogene Paste erhalten wurde.

Die hergestellten Komponenten **A** und **B** wurden in getrennten Behältern luftdicht verschlossen. Bei der Applikation wurden die Komponenten **A** und **B** im Gewichtsverhältnis **A** : **B** = 3 : 1 mittels Speedmixer (Fa. Hauschild & Co. KG, Deutschland) vermischt.

### Beschreibung der Prüfmethoden

Die **Zugscherfestigkeit** wurde gemäss DIN EN 1465 mit einer Messgeschwindigkeit von 20 mm/min auf einer Zugmaschine Zwick/Roell Z005 an Filmen mit einer Schichtdicke von 2 mm, welche vor der Messung 24h bei 23°C und 50% relativer Luftfeuchtigkeit (r.h.) gelagert wurden, gemessen. Die angegebenen Werte sind die Mittelwerte von drei Messungen. Einige Proben wurden vor dieser Messung bei verschiedenen Hochtemperaturbedingungen oder feuchtwarmen Bedingungen gelagert, um den Einfluss der Hitze auf die Proben zu überprüfen. Die Lagerbedingungen der jeweiligen Proben sind in der Tabelle 3 angegeben. Vor der Messung wurden die Proben jedoch während 24h bei 23°C und 50% r.h. temperiert.

Die **Shore A Härte** wurde bestimmt nach DIN 53505 nach einer Lagerung der ausgeharteten Zusammensetzung bei 23 C und 50% relativer Luftfeuchtigkeit wahrend 7 Tagen, bzw. wie in Tabelle 4 angegeben. Vor der Messung wurden die Hochtemperaturproben jedoch während 24h bei 23°C und 50% r.h. temperiert.

Die Methode zur Bestimmung der **Bruchdehnung** sowie die Herstellung der dazu benötigten Probekörper ist beschrieben in ISO 527. Gemessen wurde bei 23°C und 50% relativer Luftfeuchtigkeit an einem Prüfkörper Typ 1B (ISO 527-2) und mit einer Zuggeschwindigkeit von 200 mm/min. Auch bei der Bestimmung der Bruchdehnung wurden einige Proben vorab einer Hitzebehandlung unterzogen (angegeben in Tabelle 3). Vor der Messung wurden die Proben jedoch während 24h bei 23°C und 50% r.h. temperiert.

Die **Raupenhaftung** auf Glas wurde qualitativ bestimmt, indem eine Raupe der zu prüfenden gemischten Zusammensetzung auf ein entfettetes Glassubstrat appliziert wurde und 7 Tage bei 23°C und 50% r.h. ausgehärtet wurde. Bei einigen Proben wurde eine Lagerung von 1000h bei 225°C und anschliessend Temperierung während 24h bei 23°C und 50% r.h. durchgeführt.

Die Auswertung erfolgte qualitativ durch Abziehen der ausgehärteten Klebstoffraupe vom Glassubstrat. Dabei wurde beurteilt, ob das Bruchbild kohäsiv (erwünscht) oder adhäsiv (unerwünschtes Versagen der Verklebung) auftrat.

### Herstellung Vernetzer V2b

N-(2-Aminoethyl)-3-aminopropyltriethoxysilan (Geniosil^{®} GF 94, Wacker) wurde mit einer äquimolaren Menge 3-Glycidoxypropyltriethoxysilan (Geniosil^{®} GPTE, Wacker) in einem Glasgefäss unter Stickstoffatmosphäre vermischt. Das Gefäss wurde verschlossen und während 7 Tagen bei 23 °C belassen. Die resultierende Mischung, die frei von detektierbaren Epoxygruppen war, wurde ohne Aufbereitung als Organosilan **V2b** eingesetzt.

**Tabelle 1: Zweikomponentige Silikonzusammensetzungen C1 bis C3. Alle Zahlen in Gew.-%, bezogen auf die jeweilige Komponente A oder B;**

| ***Zusammensetzung*** | | ***C1*** | ***C2** Ref* | ***C3** Ref* |
|---|---|---|---|---|
| | OH-term. PDMS ^{a} (Viskosität (23°C) 50'000 mPa·s) (Polymer **P**) | 52.0 | 52.0 | 52.0 |
| | Wacker^{®} AK 100 ^{b} (Weichmacher **W**) | 10.4 | 10.4 | 10.4 |
| | Flüssiges Silikonharz (MDT) mit Ethoxysilangruppen | 3.0 | 3.0 | 3.0 |
| | Monarch^{®} 120 (Russ) | 2.0 | 2.0 | 2.0 |
| **A** | Winnofil^{®} SPM (hydrophobisierte Fällungskreide) | - | - | 30.0 |
| | Hakuenka^{®} CCR-S (hydrophobisierte Fällungskreide) | - | 30.0 | - |
| | Schaefer Precarb^{®} 400 (unbeschichtete, hydrophile Fällungskreide **F**) | 30.0 | - | - |
| | Polypropylenglykol (Dispersionsadditiv **D**) | 2.0 | 2.0 | 2.0 |
| | Silikonöl in Wasser Emulsion (58.3% H₂O) | 0.6 | 0.6 | 0.6 |
| **B** | Weichmacher **W** (Wacker^{®} Vinyl Polymer 20000) ^{c} | 46.4 | 46.4 | 46.4 |
| | Aerosil^{®} R974 (hydrophobe pyrogene Kieselsäure) | 8.0 | 8.0 | 8.0 |
| | Wacker^{®} Vernetzer ET 15 (1,2-Bis(triethoxysilyl)ethan) (Vernetzer **V1**) | 19.0 | 19.0 | 19.0 |
| | Dynasylan^{®} 1122 (Bis-3-triethoxysilylpropyl)amin) (Vernetzer **V2a**) | 9.0 | 9.0 | 9.0 |
| | Wacker^{®} Geniosil GF 56 (Vinyltriethoxysilan) (Vernetzer **V3**) | 7.0 | 7.0 | 7.0 |
| | Vernetzer **V2b** (s. Herstellvorschrift) | 10.0 | 10.0 | 10.0 |
| | Dioctylzinndineodecanoat (Katalysator **K**) | 0.6 | 0.6 | 0.6 |

| | | | | |
|---|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100 mPa·s; ^{c} Wacker Vinyl Polymer 20'000: Vinylsilan-terminiertes Polydimethylsiloxan mit einer Viskosität nach DIN 53018 von 20'000 mPa s. | | | | |

**Tabelle 2: Zweikomponentige Silikonzusammensetzungen C4 bis C6. Alle Zahlen in Gew.-%, bezogen auf die jeweilige Komponente A oder B;**

| ***Zusammensetzung*** | | ***C4** Ref* | ***C5*** | ***C6** Ref* |
|---|---|---|---|---|
| A | OH-term. PDMS ^{a} (Viskosität (23°C) 20'000 mPa·s) (Polymer **P**) | 38.9 | 38.9 | 38.9 |
| | Wacker^{®} AK 100 ^{b} (Weichmacher **W**) | 12.8 | 12.8 | 12.8 |
| | Omya^{®} BLH (gemahlene Kreide) | 16.8 | 16.8 | 9.4 |
| | Winnofil^{®} SPM (hydrophobisierte Fällungskreide) | 28.6 | - | 36.0 |
| | Schaefer Precarb^{®} 400 (unbeschichtete, hydrophile Fällungskreide **F**) | - | 28.6 | - |
| | Polypropylenglykol (Dispersionsadditiv **D**) | 2.1 | 2.1 | 2.1 |
| | Silikonöl in Wasser Emulsion (58.3% H₂O) | 0.8 | 0.8 | 0.8 |
| | Weichmacher **W** (Wacker^{®} Vinyl Polymer 20000) ^{c} | 25.3 | 25.3 | 25.3 |
| | Aerosil^{®} R974 (hydrophobe pyrogene Kieselsäure) | 11.7 | 11.7 | 11.7 |
| | Pigment | 2.3 | 2.3 | 2.3 |
| | Monarch^{®} 460 (Russ) | 14.6 | 14.6 | 14.6 |
| **B** | Wacker^{®} Vernetzer ET 15 (1,2-Bis(triethoxysilyl)ethan) (Vernetzer **V1**) | 15.6 | 15.6 | 15.6 |
| | Dynaylan^{®} 40 (oligomerisiertes Tetraethoxysilan; Ethylpolysilicat) | 13.7 | 13.7 | 13.7 |
| | Wacker^{®} Geniosil GF 94 (N-(2-Aminoethyl)-3-aminopropyltriethoxysilan) (Vernetzer **V3**) | 10.1 | 10.1 | 10.1 |
| | Dynasylan^{®} VTMO (Vinyltrimethoxysilan) (Vernetzer **V3**) | 6.2 | 6.2 | 6.2 |
| | Dioctylzinndineodecanoat (Katalysator **K**) | 0.5 | 0.5 | 0.5 |

| | | | | |
|---|---|---|---|---|
| ^{a} OH-term. PDMS: OH-Gruppen terminiertes Polydimethylsiloxan; ^{b} Wacker Polymer AK 100: Trialkylsilan-terminiertes Polydimethylsiloxan mit einer Viskosität nach DIN 53018 von 100 mPa·s; ^{c} Wacker Vinyl Polymer 20'000: Vinylsilan-terminiertes Polydimethylsiloxan mit einer Viskosität nach DIN 53018 von 20'000 mPa s. | | | | |

**Tabelle 3: Testdaten (Mechanik) der Zusammensetzungen C1 bis C₆. Die Messungen erfolgten alle bei 23°C / 50% r.h. nach der jeweiligen Behandlung. n/m: Daten wurden nicht gemessen.**

| ***Zusammensetzung*** | ***C1*** | ***C2** Ref* | ***C3** Ref* | ***C4** Ref* | ***C5*** | ***C6** Ref* |
|---|---|---|---|---|---|---|
| Zugscherfestigkeit (7d 23°C) [MPa] | 0.83 | 0.86 | 0.9 | 1.08 | 1.52 | 1.21 |
| Bruchdehnung (7d 23°C) [%] | 244 | 281 | 370 | 278 | 246 | 293 |
| Zugscherfestigkeit (300h 225°C) [MPa] | 0.79 | 0.89 | 1.06 | n/m | n/m | n/m |
| Bruchdehnung (300h 225°C) [%] | 297 | 185 | 313 | n/m | n/m | n/m |
| Zugscherfestigkeit (1000h 225°C) [MPa] | 0.82 | 1.7 | 1.15 | 0.53 | 1.03 | 0.47 |
| Bruchdehnung (1000h 225°C) [%] | 189 | 65 | 43 | 121 | 229 | 10 |
| Zugscherfestigkeit (1500h 85°C / 85% r.h.) [MPa] | 0.74 | 0.46 | 0.47 | n/m | n/m | n/m |
| Bruchdehnung (1500h 85°C / 85% r.h.) [%] | 364 | 265 | 286 | n/m | n/m | n/m |

**Tabelle 4: Testdaten (Shore A und Adhäsion) der Zusammensetzungen C1 und C2. Die Messungen erfolgten alle bei 23°C / 50% r.h. nach der jeweiligen Behandlung.**

| ***Zusammensetzung*** | ***C1*** | ***C2** Ref* |
|---|---|---|
| Shore A Härte (7d 23°C) | 34 | 30 |
| Shore A Härte (1000h 180°C) | 21 | 25 |
| Shore A Härte (1000h 200°C) | 25 | 77 |
| Shore A Härte (1000h 210°C) | 32 | 80 |
| Shore A Härte (1000h 220°C) | 39 | 82 |
| Shore A Härte (500h 230°C) | 36 | 87 |
| Shore A Härte (240h 250°C) | 43 | 84 |
| Raupenhaftung (Glas) (7d 23°C) | 100% kohäsiv | 100% kohäsiv |
| Raupenhaftung (Glas) (7d 23°C und 1000h Lagerung bei 225°C) | 100% kohäsiv | 100% adhäsiv |

## Patentansprüche

1. Zweikomponentige Silikonzusammensetzung, bestehend aus einer Komponente **A** umfassend, jeweils bezogen auf die Komponente **A,**
i) 20 bis 80 Gew.-%, bevorzugt 25 bis 70 Gew.-%, insbesondere 30 bis 60 Gew.-% Hydroxylgruppen-terminiertes Polydiorganosiloxan **P;**
ii) 5 bis 50 Gew.-%, bevorzugt 10 bis 45 Gew.-%, insbesondere 15 bis 40 Gew.-% unbeschichtete, hydrophile Fällungskreide **F;**
iii) bevorzugt zwischen 0.05 und 5.0 Gew.-% Wasser, insbesondere emulgiertes Wasser;
iv) bevorzugt zwischen 0.05 und 3.0 Gew.-% Dispersionsadditiv **D;**
v) sowie gegebenenfalls weitere Inhaltsstoffe;
und einer Komponente **B** umfassend
i) bevorzugt mindestens ein nicht kondensierbares Polydiorganosiloxan **W als** Weichmacher;
ii) mindestens ein Organosilan **V** als Vernetzer;
iii) mindestens einen Katalysator **K** für die Vernetzung von Polydiorganosiloxanen;
iv) sowie gegebenenfalls weitere Inhaltsstoffe;
**dadurch gekennzeichnet, dass**
die Silikonzusammensetzung, falls vorhanden, weniger als 5 Gew.-%, bezogen auf die gesamte Zusammensetzung, beschichtete, hydrophobe Fällungskreide enthält.

2. Zweikomponentige Silikonzusammensetzung gemäss Anspruch 1, **dadurch gekennzeichnet, dass** das Hydroxylgruppen-terminierte Polydiorganosiloxan **P ein** Polydiorganosiloxan **P'** der Formel (IV) ist 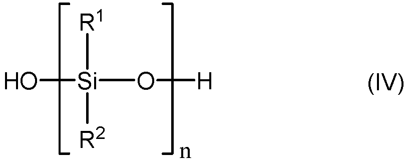 wobei die Reste R¹ und R² unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen, wobei die Reste R¹ und R² bevorzugt für Alkylreste mit 1 bis 5, insbesondere mit 1 bis 3, C-Atomen, am meisten bevorzugt für Methylgruppen, stehen;
und n so gewählt ist, dass das Gewichtsmittel des Molekulargewichts M_{w} des Polydiorganosiloxans **P'** relativ zu Polystyrol 500 bis 250'000 g/mol, bevorzugt 1'000 bis 100'000 g/mol beträgt.

3. Zweikomponentige Silikonzusammensetzung gemäss einem der Ansprüche 1 oder 2, **dadurch gekennzeichnet, dass** die Zusammensetzung gar keine, beschichtete, hydrophobe Fällungskreide enthält.

4. Zweikomponentige Silikonzusammensetzung gemäss einem der vorhergehenden Ansprüche, **dadurch gekennzeichnet, dass** die weiteren Inhaltsstoffe in Komponente **A** und/oder Komponente **B** ausgewählt sind aus nicht reaktiven Polydiorganosiloxanen, weiteren Füllstoffen, Pigmenten, Stabilisatoren, Rheologieadditiven, sowie Bioziden.

5. Zweikomponentige Silikonzusammensetzung gemäss einem der vorhergehenen Ansprüche, **dadurch gekennzeichnet, dass** Organosilan **V**
zwischen 1 und 50 Gew.-%, bezogen auf die Komponente **B,** mindestens eines ersten Organosilans **V1** nach Formel (I) umfasst; und/oder 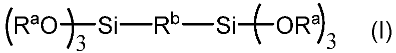
zwischen 2 und 60 Gew.-%, bezogen auf die Komponente **B,** mindestens eines zweiten Organosilans **V2** nach Formel (II) umfasst; 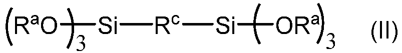
und bis zu 25 Gew.-%, bezogen auf die Komponente **B,** weitere Organosilane **V3** mit hydrolysierbaren Alkxoysilangruppen Si-OR^{a}, welche nicht unter die Formeln (I) und (II) fallen, umfasst;
wobei R^{a} für ein Wasserstoffatom oder eine Ethylgruppe oder eine Methylgruppe steht, insbesondere eine Methylgruppe;
R^{b} für einen divalenten, linearen oder verzweigten Alkylrest oder Alkenylrest mit 2 bis 20 Kohlenstoffatomen steht, und
R^{c} für einen divalenten, linearen oder verzweigten Alkylrest mit 2 bis 20 Kohlenstoffatomen steht, der mindestens eine sekundäre Aminogruppe enthält;
mit der Massgabe, dass die Zusammensetzung weniger als 10 mol-%, bezogen auf die Menge an Organosilan **V2,** an Organosilanen mit Epoxygruppen enthält.

6. Zweikomponentige Silikonzusammensetzung gemäss Anspruch 5, **dadurch gekennzeichnet, dass** Organosilan **V3** mindestens ein Silan der Formel (III) umfasst, 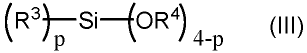
wobei der Rest R³ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; der Rest R⁴ für einen Rest R^{a} steht; und
p für einen Wert von 0 bis 4 steht, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe aufweisen.

7. Zweikomponentige Silikonzusammensetzung gemäss Anspruch 6, **dadurch gekennzeichnet, dass** Komponente **B** zudem oligomere Siloxane, gebildet aus der Kondensation von Silanen der Formel (III), umfasst.

8. Zweikomponentige Silikonzusammensetzung gemäss einem der Ansprüche 5 bis 7, **dadurch gekennzeichnet, dass** das Organosilan **V2** mindestens ein Organosilan nach Formel (IIa) umfasst, 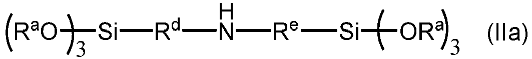
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht, der optional eine sekundäre Aminogruppe enthält.

9. Zweikomponentige Silikonzusammensetzung gemäss Anspruch 8, **dadurch gekennzeichnet, dass** das Organosilan **V2** entweder
- ein Organosilan **V2a** darstellt, bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest; oder
- ein Organosilan **V2b** darstellt, bei dem Rest R^{e} in Formel (IIa) für einen divalenten, linearen oder verzweigten Alkylrest mit 2 bis 10 Kohlenstoffatomen steht, der optional eine sekundäre Aminogruppe enthält, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind; 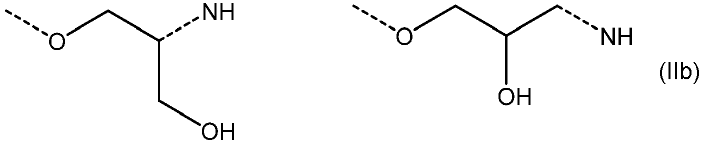
- oder eine Mischung aus einem Organosilan **V2a** und einem Organosilan **V2b** darstellen, wobei die genannten Organosilane **V2a** und **V2b** bevorzugt in einem Gewichtsverhältnis von zwischen 1:2 und 2:1 in der Komponente B enthalten sind.

10. Zweikomponentige Silikonzusammensetzung gemäss Anspruch 9, **dadurch gekennzeichnet, dass** Organosilan **V2** ein Organosilan **V2a** umfasst, wobei Organosilan **V2a** in einer Menge von zwischen 5 Gew.-% und 20 Gew.-% bezogen auf Komponente **B** enthalten ist, und Organosilan **V2** ein Organosilan **V2b** umfasst, wobei Organosilan **V2b** in einer Menge von zwischen 5 Gew.-% und 20 Gew.-% bezogen auf Komponente **B** enthalten ist, und dass mindestens ein Organosilan **V3** mit einer Menge von zwischen 2.5 Gew.-% und 20 Gew.-% bezogen auf Komponente **B** enthalten ist, und dass der Katalysator **K** in einer Menge von zwischen 0.1 Gew.-% und 1.5 Gew.-%, bezogen auf Komponente **B,** in der Komponente **B** enthalten ist.

11. Zweikomponentige Silikonzusammensetzung gemäss einem der Ansprüche 9 oder 10, **dadurch gekennzeichnet, dass** Organosilan **V2b** einen Rest R^{e} einen divalenten Cs Alkylrest darstellt, welcher eine sekundäre Aminogruppe in der Kohlenstoffkette aufweist und Rest R^{d} einen linearen, divalenten C₆ Alkylrest darstellt, welcher einen Ethersauerstoff in der Kohlenstoffkette aufweist, sowie eine Hydroxylgruppe aufweist.

12. Zweikomponentige Silikonzusammensetzung gemäss einem der vorhergehenden Ansprüche, **dadurch gekennzeichnet, dass** das Gewichtsverhältnis von Komponente **A** zu Komponente **B** ≥ 1:1, insbesondere von 1.5:1 bis 20:1, bevorzugt von 2:1 bis 16:1, beträgt.

13. Zweikomponentige Silikonzusammensetzung gemäss einem der vorhergehenden Ansprüche, **dadurch gekennzeichnet, dass** das Dispersionsadditiv **D** eine polymere Substanz mit mindestens teilweise Polyetheranteilen darstellt.

14. Verwendung einer zweikomponentigen Silikonzusammensetzung gemäss einem der Ansprüche 1 bis 13 als Klebstoff, Dichtstoff, Beschichtung oder als Gussmasse, insbesondere für die Herstellung oder Reparatur von Fassaden, Brandschutzfugen, Fenstern, Isolierglas, Solaranlagen, Automobilen, Zügen, Bussen, Schiffen, weisser, brauner und roter Ware, elektronischen Bauteilen oder Sanitäranlagen oder für den Bau, besonders bevorzugt für Fahrzeugteile aus dem Motor- oder Auspuffbereich, Backöfen, Mikrowellen, Bügeleisen, Rundfunkempfänger, Radiatoren und Wasserinstallationen.

15. Verwendung gemäss Anspruch 14, **dadurch gekennzeichnet, dass** die zweikomponentige Silikonzusammensetzung als Klebstoff in der industriellen Fertigung verwendet wird.

16. Verwendung gemäss Anspruch 14 oder 15 für Hochtemperaturanwendungen, bei denen die gehärtete Silikonzusammensetzung zumindest zeitweise oder dauerhaft Temperaturen von mehr als 150°C und insbesondere mehr als 200°C ausgesetzt wird.

17. Gehärtete Silikonzusammensetzung, **dadurch gekennzeichnet, dass** sie erhältlich ist aus einer zweikomponentigen Silikonzusammensetzung gemäss einem der Ansprüche 1 bis 13 durch Mischen der Komponente **A** mit der Komponente **B.**
